# EUROPEAN PATENT APPLICATION

(11) **EP 4 572 290 A1**
(43) Date of publication of application: **18.06.2025**
(21) Application number: 23861962.1
(22) Date of filing: 19.06.2023
(51) Int. Cl.: H04L 61/50

(54) **DATA PROCESSING METHOD AND DEVICE**

(30) Priority: 06.09.2022 CN 202211082777
(71) Applicant: Huawei Technologies Co., Ltd., Shenzhen, Guangdong 518129 (CN)
(72) Inventor: XIANG, Guangyou, Shenzhen, Guangdong 518129 (CN); ZHANG, Peng, Shenzhen, Guangdong 518129 (CN); CUI, Wenlin, Shenzhen, Guangdong 518129 (CN)
(74) Representative: Goddar, Heinz J.
(86) International application number: PCT/CN2023/101002
(87) International publication number: WO 2024/051259

(57) **Abstract**

This application provides a data processing method and an apparatus, and relates to the storage field. The method includes: An interface card of a computing node receives a write request from an application, where the write request carries to-be-processed data; and the interface card sends a network packet whose destination address is a first address, where the network packet carries the to-be-processed data, the first address indicates a storage unit of the to-be-processed data in a storage node, and the network packet is used to write the to-be-processed data into the storage unit; and the interface card communicates with the storage node through a network. The method is used to efficiently and conveniently implement a read/write process of the computing node on the storage node.

## Description

This application claims priority to Chinese Patent Application No. 202211082777.8, filed with the China National Intellectual Property Administration on September 6, 2022 and entitled "DATA PROCESSING METHOD AND APPARATUS", which is incorporated herein by reference in its entirety.

### TECHNICAL FIELD

This application relates to the data storage field, and in particular, to a data processing method and an apparatus.

### BACKGROUND

Currently, to meet data storage requirements of services, in a conventional technology, a computing node (for example, the computing node may include a device such as a service server or a personal computer) may store data in a storage node (for example, the storage node may be a device such as a storage server), and read data from the storage node.

Therefore, how to efficiently and conveniently implement a read/write process of the computing node on the storage node becomes one of important factors that affect service running.

### SUMMARY

This application provides a data processing method and an apparatus, to efficiently and conveniently implement data reading/writing of a computing node on a storage node.

According to a first aspect, a data processing method is provided. The method includes: An interface card of a computing node receives a write request from an application, where the write request carries to-be-processed data; and the interface card sends a network packet whose destination address is a first address, where the network packet carries the to-be-processed data, the first address indicates a storage unit of the to-be-processed data in a storage node, and the network packet is used to write the to-be-processed data into the storage unit; and the interface card communicates with the storage node through a network.

In the foregoing method, a network address is allocated to the storage unit in the storage node (that is, location information of the storage unit in the storage node is addressed to the network address). In this way, the computing node may write data into the storage unit in the storage node in a manner of sending the network packet (the destination address of the network packet indicates the storage unit in the storage node), that is, access to the storage node is implemented by using an addressing capability of a network layer. In comparison with the conventional technology, in this method, a front-end protocol conversion process on a side of the computing node and a back-end protocol conversion process on a side of the storage node can be simplified, thereby reducing system resource consumption in a data read/write process.

In an implementation, the method further includes: The interface card allocates the storage unit to the to-be-processed data in the storage node.

In the foregoing implementation, the computing node may manage a storage resource in the storage node.

In an implementation, the first address includes at least one of a first address field, a second address field, and a third address field, the first address field identifies the storage node, the second address field identifies a hard disk that is in the storage node and that is configured to store the to-be-processed data, and the second address field identifies the storage unit that is in the hard disk and that is configured to store the to-be-processed data.

In the foregoing implementation, the first address includes the first address field, so that the network packet can be successfully forwarded to the storage node based on the first address. The first address includes the second address field, so that the interface card of the storage node can determine, based on the first address, the hard disk that is in the storage node and that is configured to store the to-be-processed data. The first address includes the third address field, so that the interface card of the storage node can determine, based on the first address, the storage unit that is in the hard disk and that is configured to store the to-be-processed data.

In an implementation, the first address includes a fourth address field, and the fourth address field indicates to write the to-be-processed data into the storage unit.

In the foregoing implementation, the first address includes the fourth address field, so that the interface card of the storage node can determine that the network packet is a network packet used for data writing, to subsequently perform tasks such as reading the to-be-processed data in the network packet and writing the to-be-processed data into the storage unit corresponding to the first address.

In an implementation, the first address is an internet protocol version 6 IPv6 address.

According to a second aspect, a data processing method is provided. The method includes: An interface card of a storage node receives a network packet whose destination address is a first address from a computing node, where the network packet carries to-be-processed data; and the interface card communicates with the computing node through a network; the interface card determines a storage unit in the storage node corresponding to the first address; and the interface card writes the to-be-processed data into the storage unit.

In the foregoing method, a network address is allocated to the storage unit in the storage node (that is, location information of the storage unit in the storage node is addressed to the network address). In this way, after receiving the network packet, the interface card of the storage node may determine the storage unit of the to-be-processed data in the storage node based on the destination address of the network packet, that is, the storage unit of the to-be-processed data in the storage node may be determined by using an addressing capability of a network layer, to implement access to the storage unit. In the foregoing method, a front-end protocol conversion process on a side of the computing node and a back-end protocol conversion process on a side of the storage node can be simplified, thereby reducing system resource consumption in a data read/write process.

In an implementation, that the interface card determines a storage unit in the storage node corresponding to the first address includes: The interface card determines, based on a first address field in the first address, that the network packet is a network packet sent to the storage node; the interface card determines, based on a second address field in the first address, a hard disk that is in the storage node and that is configured to store the to-be-processed data; and the interface card determines, based on a third address field in the first address, the storage unit that is in the hard disk and that is configured to store the to-be-processed data.

In the foregoing implementation, the first address field for indicating the storage node, the second address field for determining the hard disk in the storage node, and the third address field for determining the storage unit in the hard disk are combined into the first address. Therefore, the network packet can be successfully forwarded to the storage node based on the first address, the hard disk that is in the storage node and that is used to store the to-be-processed data can be determined based on the first address, and the storage unit that is in the hard disk and that is configured to store the to-be-processed data can be determined based on the first address.

In an implementation, the method further includes: The interface card determines, based on a fourth address field in the first address, that the network packet is used to write the to-be-processed data into the storage unit.

In the foregoing implementation, the first address includes the fourth address field, so that the interface card of the storage node can determine that the network packet is a network packet used for data writing, to subsequently perform tasks such as reading the to-be-processed data in the network packet and writing the to-be-processed data into the storage unit corresponding to the first address.

According to a third aspect, a data processing method is provided. The method includes: An interface card of a computing node receives a read request from an application, where the read request is used to request to read to-be-processed data; the interface card sends a network packet whose destination address is a first address, where the first address indicates a storage unit of the to-be-processed data in a storage node, and the network packet is used to read the to-be-processed data in the storage unit; and the interface card communicates with the storage node through a network; and the interface card receives the to-be-processed data from the storage node.

In the foregoing method, a network address is allocated to the storage unit in the storage node (that is, location information of the storage unit in the storage node is addressed to the network address). In this way, the computing node may read data stored in the storage node in a manner of sending the network packet (the destination address of the network packet indicates the storage unit in the storage node), that is, access to the storage node is implemented by using an addressing capability of a network layer. In comparison with the conventional technology, in this method, a front-end protocol conversion process on a side of the computing node and a back-end protocol conversion process on a side of the storage node can be simplified, thereby reducing system resource consumption in a data read/write process.

In an implementation, the first address includes at least one of a first address field, a second address field, and a third address field, the first address field identifies the storage node, the second address field identifies a hard disk that is in the storage node and that is configured to store the to-be-processed data, and the second address field identifies the storage unit that is in the hard disk and that is configured to store the to-be-processed data.

In the foregoing implementation, the first address includes the first address field, so that the network packet can be successfully forwarded to the storage node based on the first address. The first address includes the second address field, so that the interface card of the storage node can determine, based on the first address, the hard disk that is in the storage node and that is configured to store the to-be-processed data. The first address includes the third address field, so that the interface card of the storage node can determine, based on the first address, the storage unit that is in the hard disk and that is configured to store the to-be-processed data.

In an implementation, the first address includes a fourth address field, and the fourth address field indicates that the network packet is used to write the to-be-processed data into the storage unit.

In the foregoing implementation, the first address includes the fourth address field, so that the interface card of the storage node can determine that the network packet is a network packet used for data writing, to subsequently perform tasks such as reading the to-be-processed data in the network packet and writing the to-be-processed data into the storage unit corresponding to the first address.

In an implementation, the first address is an internet protocol version 6 IPv6 address.

According to a fourth aspect, a data processing method is provided. The method includes: An interface card of a storage node receives a network packet whose destination address is a first address from a computing node, where the interface card communicates with the computing node through a network; the interface card determines a storage unit in the storage node corresponding to the first address; and the interface card sends, to the computing node, to-be-processed data stored in the storage unit.

In the foregoing method, a network address is allocated to the storage unit in the storage node (that is, location information of the storage unit in the storage node is addressed to the network address). In this way, after receiving the network packet, the interface card of the storage node may determine the storage unit of the to-be-processed data in the storage node based on the destination address of the network packet, that is, the storage unit of the to-be-processed data in the storage node may be determined by using an addressing capability of a network layer, to implement access to the storage unit. In the foregoing method, a front-end protocol conversion process on a side of the computing node and a back-end protocol conversion process on a side of the storage node can be simplified, thereby reducing system resource consumption in a data read/write process.

In an implementation, that the interface card determines a storage unit in the storage node corresponding to the first address includes: The interface card determines, based on a first address field in the first address, that the network packet is a network packet sent to the storage node; the interface card determines, based on a second address field in the first address, a hard disk that is in the storage node and that is configured to store the to-be-processed data; and the interface card determines, based on a third address field in the first address, the storage unit that is in the hard disk and that is configured to store the to-be-processed data.

In the foregoing implementation, the first address field for indicating the storage node, the second address field for determining the hard disk in the storage node, and the third address field for determining the storage unit in the hard disk are combined into the first address. Therefore, the network packet can be successfully forwarded to the storage node based on the first address, the hard disk that is in the storage node and that is used to store the to-be-processed data can be determined based on the first address, and the storage unit that is in the hard disk and that is configured to store the to-be-processed data can be determined based on the first address.

In an implementation, the method further includes: The interface card determines, based on a fourth address field in the first address, that the network packet is used to write the to-be-processed data into the storage unit.

In the foregoing implementation, the first address includes the fourth address field, so that the interface card of the storage node can determine that the network packet is a network packet used for data writing, to subsequently perform tasks such as reading the to-be-processed data in the network packet and writing the to-be-processed data into the storage unit corresponding to the first address.

According to a fifth aspect, an interface card is provided. The interface card is used in a computing node in a storage system, and the interface card includes: a processing unit, configured to receive a write request from an application, where the write request carries to-be-processed data; and a communication unit, configured to send a network packet whose destination address is a first address, where the network packet carries the to-be-processed data, the first address indicates a storage unit of the to-be-processed data in a storage node, and the network packet is used to write the to-be-processed data into the storage unit; and the interface card communicates with the storage node through a network.

In an implementation, the processing unit is further configured to allocate the storage unit to the to-be-processed data in the storage node.

In an implementation, the first address includes at least one of a first address field, a second address field, and a third address field, the first address field identifies the storage node, the second address field identifies a hard disk that is in the storage node and that is configured to store the to-be-processed data, and the second address field identifies the storage unit that is in the hard disk and that is configured to store the to-be-processed data.

In an implementation, the first address includes a fourth address field, and the fourth address field indicates to write the to-be-processed data into the storage unit.

In an implementation, the first address is an internet protocol version 6 IPv6 address.

According to a sixth aspect, an interface card is provided. The interface card is used in a storage node in a storage system, and the interface card includes: a communication unit, configured to receive a network packet whose destination address is a first address from a computing node, where the network packet carries to-be-processed data; and the interface card communicates with the computing node through a network; and a processing unit, configured to determine a storage unit in the storage node corresponding to the first address, where the processing unit is configured to write the to-be-processed data into the storage unit.

In an implementation, that a processing unit is configured to determine a storage unit in the storage node corresponding to the first address includes: The processing unit is configured to determine, based on a first address field in the first address, that the network packet is a network packet sent to the storage node; the processing unit is configured to determine, based on a second address field in the first address, a hard disk that is in the storage node and that is configured to store the to-be-processed data; and the processing unit is configured to determine, based on a third address field in the first address, the storage unit that is in the hard disk and that is configured to store the to-be-processed data.

In an implementation, the processing unit is further configured to determine, based on a fourth address field in the first address, that the network packet is used to write the to-be-processed data into the storage unit.

According to a seventh aspect, an interface card is provided. The interface card is used in a computing node in a storage system, and the interface card includes: a processing unit, configured to receive a read request from an application, where the read request is used to request to read to-be-processed data; and a communication unit, configured to send a network packet whose destination address is a first address, where the first address indicates a storage unit of the to-be-processed data in a storage node, and the network packet is used to read the to-be-processed data in the storage unit; and the interface card communicates with the storage node through a network, where the communication unit is further configured to receive the to-be-processed data from the storage node.

In an implementation, the first address includes at least one of a first address field, a second address field, and a third address field, the first address field identifies the storage node, the second address field identifies a hard disk that is in the storage node and that is configured to store the to-be-processed data, and the second address field identifies the storage unit that is in the hard disk and that is configured to store the to-be-processed data.

In an implementation, the first address includes a fourth address field, and the fourth address field indicates that the network packet is used to write the to-be-processed data into the storage unit.

In an implementation, the first address is an internet protocol version 6 IPv6 address.

According to an eighth aspect, an interface card is provided. The interface card is used in a storage node in a storage system, and the interface card includes: a communication unit, configured to receive a network packet whose destination address is a first address from a computing node, where the interface card communicates with the computing node through a network; and a processing unit, configured to determine a storage unit in the storage node corresponding to the first address, where the communication unit is further configured to send, to the computing node, to-be-processed data stored in the storage unit.

In an implementation, that a processing unit is configured to determine a storage unit in the storage node corresponding to the first address includes: The processing unit is configured to determine, based on a first address field in the first address, that the network packet is a network packet sent to the storage node; the processing unit is configured to determine, based on a second address field in the first address, a hard disk that is in the storage node and that is configured to store the to-be-processed data; and the processing unit is configured to determine, based on a third address field in the first address, the storage unit that is in the hard disk and that is configured to store the to-be-processed data.

In an implementation, the processing unit is further configured to determine, based on a fourth address field in the first address, that the network packet is used to write the to-be-processed data into the storage unit.

According to a ninth aspect, an interface card is provided. The interface card includes a storage and a processor. The storage is configured to store computer instructions, and the processor is configured to invoke the computer instructions from the storage and run the computer instructions, to implement the method according to any one of the first aspect or the implementations of the first aspect, or any one of the second aspect or the implementations of the second aspect, or any one of the third aspect or the implementations of the third aspect, or any one of the fourth aspect or the implementations of the fourth aspect.

According to a tenth aspect, a chip is provided. The chip includes a storage and a processor. The storage is configured to store computer instructions, and the processor is configured to invoke the computer instructions from the storage and run the computer instructions, to implement the method according to any one of the first aspect or the implementations of the first aspect, or any one of the second aspect or the implementations of the second aspect, or any one of the third aspect or the implementations of the third aspect, or any one of the fourth aspect or the implementations of the fourth aspect.

According to an eleventh aspect, a computer-readable storage medium is provided. The storage medium stores a computer program; and when the computer program is executed by a processor, the method according to any one of the first aspect or the implementations of the first aspect, or any one of the second aspect or the implementations of the second aspect, or any one of the third aspect or the implementations of the third aspect, or any one of the fourth aspect or the implementations of the fourth aspect is implemented.

According to a twelfth aspect, a computer program product is provided. The computer program product includes instructions; and when the instructions are run on a processor, the method according to any one of the first aspect or the implementations of the first aspect, or any one of the second aspect or the implementations of the second aspect, or any one of the third aspect or the implementations of the third aspect, or any one of the fourth aspect or the implementations of the fourth aspect is implemented.

According to a thirteenth aspect, a storage system is provided. The storage system includes at least one computing node and at least one storage node. The at least one computing node is configured to perform the method according to any one of the first aspect or the implementations of the first aspect, or any one of the second aspect or the implementations of the second aspect. The at least one storage node is configured to perform the method according to any one of the third aspect or the implementations of the third aspect, or any one of the fourth aspect or the implementations of the fourth aspect.

### BRIEF DESCRIPTION OF DRAWINGS

FIG. 1 is a diagram 1 of a structure of a storage system according to an embodiment of this application;
FIG. 2 is a diagram 2 of a structure of a storage system according to an embodiment of this application;
FIG. 3 is a schematic flowchart of a data storage method in a related technology;
FIG. 4 is a schematic flowchart 1 of a data processing method according to an embodiment of this application;
FIG. 5 is a schematic flowchart 2 of a data processing method according to an embodiment of this application;
FIG. 6 is a diagram 1 of a structure of a network packet according to an embodiment of this application;
FIG. 7 is a diagram 2 of a structure of a network packet according to an embodiment of this application;
FIG. 8 is a schematic flowchart 3 of a data processing method according to an embodiment of this application;
FIG. 9 is a diagram 3 of a structure of a network packet according to an embodiment of this application;
FIG. 10 is a diagram 4 of a structure of a network packet according to an embodiment of this application;
FIG. 11 is a diagram 1 of a structure of an interface card according to an embodiment of this application; and
FIG. 12 is a diagram 2 of a structure of an interface card according to an embodiment of this application.

### DESCRIPTION OF EMBODIMENTS

The following describes technical solutions in embodiments of this application with reference to accompanying drawings in embodiments of this application. To clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

For ease of understanding embodiments, an application scenario of the technical solutions provided in embodiments is first described.

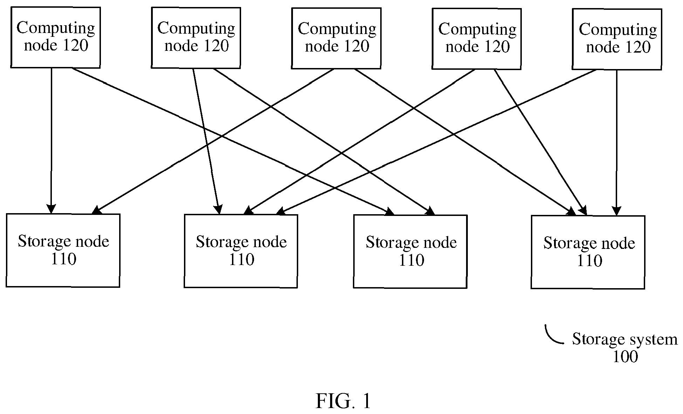

For example, FIG. 1 is a diagram of a structure of a storage system according to an embodiment. The storage system 100 may include one or more computing nodes 120 and one or more storage nodes 110. In the storage system 100, each computing node 120 may store data on the storage node 110 or read data from the storage node 110. Specifically, during actual application, functions of the computing nodes 120 and the storage nodes 110 in the storage system 100 may be implemented by various hardware devices.

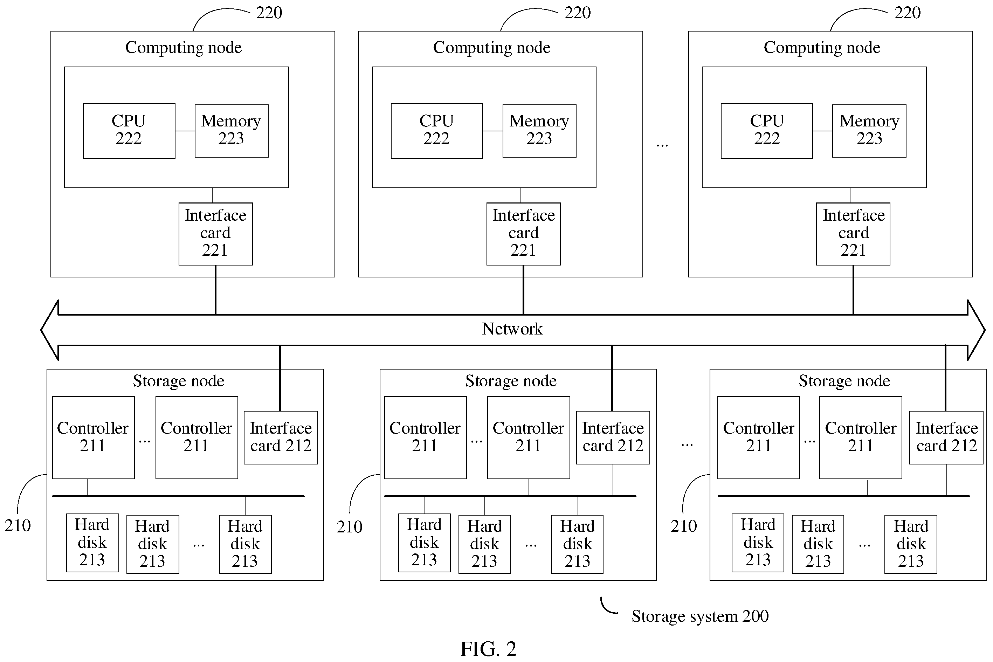

In an implementation, when each computing node and each storage node in the storage system 100 are independent devices, a specific structure of the storage system 100 may be shown in the storage system 200 in FIG. 2.

The storage system 200 includes one or more computing nodes 220 (three computing nodes shown in FIG. 2, but not limited to computing nodes), and the computing nodes 220 may communicate with each other. Each computing node 220 may be a computing device. For example, the computing node 220 may be a server, a desktop computer, a controller of a storage array, or the like.

In terms of hardware, as shown in FIG. 2, the computing node 220 includes at least an interface card 221, a processor 222, and a memory 223. The processor 222 may be a central processing unit (CPU), and is configured to process a data access request from outside the computing node 220 or a data access request generated inside the computing node 220. For example, when receiving data write requests sent by a user, the processor 222 temporarily stores data in the data write requests in the memory 223. When a total amount of data in the memory 223 reaches a specific threshold, the processor 222 sends the data stored in the memory 223 to the storage node 210 for persistent storage. In addition, the processor 222 is further configured to perform calculation or processing on data, for example, metadata management, data deduplication, data compression, virtualized storage space, and address translation. In FIG. 2, each computing node 220 shows only one CPU 222. During actual application, there may be a plurality of CPUs 222. In addition, each CPU 222 may have one or more CPU cores. In embodiments, a quantity of CPUs and a quantity of CPU cores may not be limited.

The memory 223 is an internal storage that directly exchanges data with the processor. The memory 223 can read and write the data at a high speed at any time, and serves as a temporary data storage of an operating system or another running program. There may be at least two types of memories 223. For example, the memory may be a random access memory, a dynamic random access memory (DRAM), or a storage class memory (Storage Class Memory, SCM). The DRAM is a semiconductor memory, and is a volatile memory (volatile memory) device like most random access memory (RAM) devices. The SCM uses a composite storage technology that combines features of both a conventional storage apparatus and a memory. The storage class memory can provide a higher read/write speed than a hard disk, but has a lower access speed than the DRAM, and has lower costs than the DRAM. However, the DRAM and the SCM are merely examples for description in embodiments. The memory may further include another random access memory, for example, a static random access memory (SRAM). For example, the read only memory may be a programmable read-only memory (PROM), an erasable programmable read-only memory (EPROM), or the like. In addition, the memory 223 may alternatively be a dual in-line memory module (DIMM), namely, a module formed by a dynamic random access memory (DRAM), or may be a solid state disk (SSD). During actual application, a plurality of memories 223 and memories 223 of different types may be configured in each computing node 220. A quantity and a type of the memory 223 are not limited in embodiments. In addition, the memory 223 may be configured to have a power protection function. The power protection function means that data stored in the memory 223 is not lost when a system is powered off and then powered on again. The memory having the power protection function is referred to as a non-volatile memory.

The interface card 221, namely, a network interface card (network interface card, NIC), is configured to communicate with the storage node 210. For example, when a total amount of data in the memory 223 reaches a specific threshold, the computing node 220 may send, through the interface card 221, a request to the storage node 210 according to the method provided in embodiments, to perform persistent storage on the data. In addition, the computing node 220 may further include a bus, used for communication between components inside the computing node 220. In terms of functions, a main function of the computing node 220 in FIG. 2 is a computing service, and a remote storage may be used to implement persistent storage during data storage. Therefore, the computing node 220 has fewer local memories than a conventional server, thereby saving costs and space. However, this does not mean that the computing node 220 cannot have a local storage. During actual implementation, the computing node 220 may alternatively have a small quantity of built-in hard disks or a small quantity of externally-connected hard disks.

Any computing node 220 may access any storage node 210 in a storage node cluster through a network. The storage node cluster includes a plurality of storage nodes 210 (FIG. 2 shows three storage nodes 210, but is not limited to three storage nodes 210). One storage node 210 includes one or more controllers 211, an interface card 212, and a plurality of hard disks 213. The interface card 212 is configured to communicate with the computing node 220. The hard disk 213 is configured to store data, and may be a magnetic disk or another type of storage medium, for example, a solid state disk or a shingled magnetic recording hard disk. The controller 211 is configured to write data into the hard disk 213 or read data from the hard disk 213 based on a data read/write request sent by the computing node 220. In a data read/write process, the controller 211 may translate an address carried in the data read/write request into an address that can be identified by the hard disk. It can be learned that the controller 211 also has some simple computing functions.

During actual application, the controller 211 may have a plurality of forms. In one case, the controller 211 includes a CPU and a memory. The CPU is configured to perform operations such as address translation and data reading/writing. The storage is configured to temporarily store data to be written into the hard disk 213, or read, from the hard disk 213, data to be sent to the computing node 220. In another case, as shown in FIG. 2, the controller 211 is a programmable electronic component, for example, a data processing unit (data processing unit, DPU). The DPU has versatility and programmability of the CPU, but is more specialized, and can run efficiently on a network data packet, a storage request, or an analysis request. The DPU is distinguished from the CPU by a high degree of parallelism (which requires processing a large quantity of requests). Optionally, the DPU herein may alternatively be replaced with a processing chip such as a graphics processing unit (graphics processing unit, GPU) or an embedded neural-network processing unit (neural-network processing unit, NPU). Usually, there may be one, two, or more controllers 211. When the storage node 210 includes at least two controllers 211, there may be a home relationship between the hard disk 213 and the controller 211. When there is a home relationship between the hard disk 213 and the controller 211, each controller can access only a hard disk that homes to the controller. Therefore, this usually involves forwarding a read/write data request between the controllers 211, resulting in a long data access path. In addition, if storage space is insufficient, when a new hard disk 213 is added to the storage node 210, a home relationship between the hard disk 213 and the controller 211 needs to be rebound, and an operation is complex. Consequently, scalability of the storage space is poor.

Therefore, in another implementation, a function of the controller 211 may be offloaded to the interface card 212. In other words, in the implementation shown in FIG. 2, the storage node 210 inside may not have the controller 211, but the interface card 212 completes data reading/writing, address translation, and another calculation function. In this case, the interface card 212 is an intelligent network interface card. The intelligent network interface card may include a CPU and a memory. The CPU is configured to perform operations such as address translation and data reading/writing. The storage is configured to temporarily store data to be written into the hard disk 213, or read, from the hard disk 213, data to be sent to the computing node 220. In addition, the interface card 212 may alternatively be a programmable electronic component, for example, a data processing unit (data processing unit, DPU). The DPU has versatility and programmability of the CPU, but is more specialized, and can run efficiently on a network data packet, a storage request, or an analysis request. The DPU is distinguished from the CPU by a high degree of parallelism (which requires processing a large quantity of requests). Optionally, the DPU herein may alternatively be replaced with a processing chip such as a graphics processing unit (graphics processing unit, GPU) or an embedded neural-network processing unit (neural-network processing unit, NPU). There is no home relationship between the interface card 212 and the hard disk 213 in the storage node 210, and the interface card 212 may access any hard disk 213 in the storage node 210. Therefore, it is convenient to expand a hard disk when storage space is insufficient.

It is easy to understand that FIG. 2 provides only an example of an architecture of the storage system. In some possible designs, the storage system may also use another architecture. For example, the storage system may include one or more servers. Each server is a device that has both a computing capability and a storage capability. A virtual machine can be created on each server. Computing resources required by each virtual machine are from a local processor and a local storage of the server. The storage resources required by the virtual machine can be from a local hard disk of the server or a hard disk of another server. In addition, various applications may run in the virtual machine, and a user may trigger the data read/write request by using the application in the virtual machine. The virtual machine is used as a client to access the storage system. In this case, each virtual machine running on the server is equivalent to the computing node 220 in FIG. 2, and each server may be further configured to implement a function of the storage node 210 in FIG. 2.

In addition, to facilitate understanding of the technical solutions provided in embodiments of this application, the foregoing mainly uses a distributed storage system including a plurality of storage nodes as an example to describe the application scenario of embodiments of this application. However, it should be noted that the foregoing related descriptions of the distributed storage system are not intended to be construed as a limitation on the framework of the storage system to which this application is applied. For example, in some other application scenarios, embodiments of this application may also be applied to a centralized storage system. Specifically, a difference from the distributed storage system is that the centralized storage system may be understood as a central node formed by one or more primary devices, data is centrally stored in the central node, and data processing services of the entire system are centrally deployed in the central node. In other words, the framework structure of the storage system to which the technical solutions provided in embodiments of this application are applied may not be limited in embodiments of this application.

The following describes in detail the technical solutions provided in embodiments with reference to examples.

In a related technology, to implement the data read/write operation performed by the computing node on the storage node, a plurality of times of software stack processing need to be performed, that is, a plurality of times of protocol format conversion need to be performed. Consequently, an implementation process is complex, and a large quantity of system resources need to be consumed.

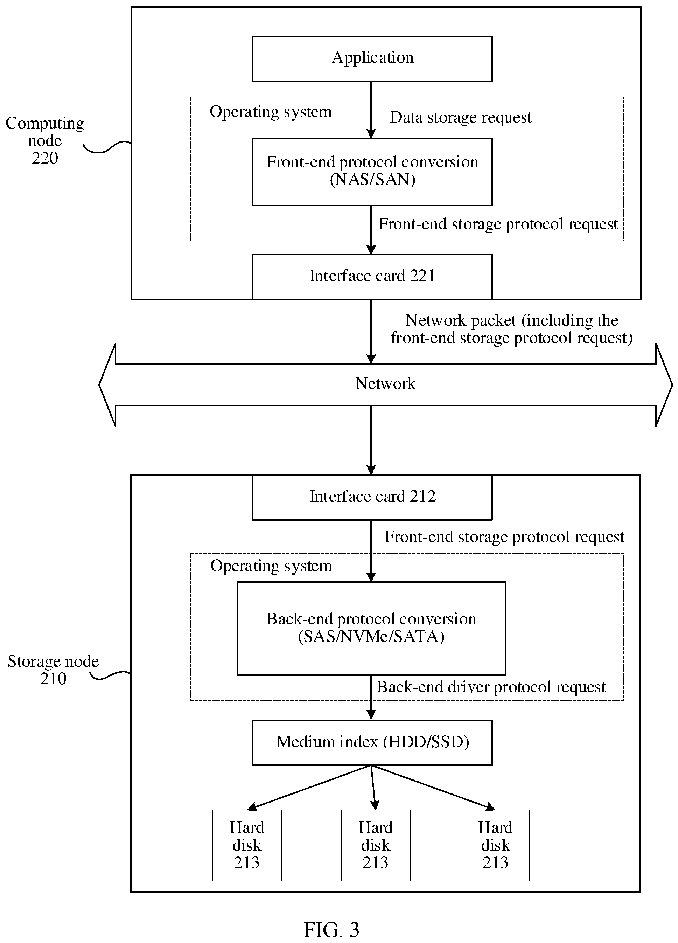

For example, a process in which one computing node 220 writes data into one storage node 210 in FIG. 2 is used as an example. When the computing node 220 writes the data into the storage node 210, as shown in FIG. 3, first, in the computing node 220, an application (application, APP) first sends a data storage request (carrying to-be-written data and a logical address of the to-be-written data) to the operating system. The operating system performs front-end protocol conversion according to a corresponding storage protocol, and converts the data storage request of the application into a front-end storage protocol request.

For example, currently, commonly used storage protocols include a storage area network (Storage Area Network, SAN) protocol and a network attached storage (Network Attached Storage, NAS) protocol. The SAN may specifically include two protocols: a non-volatile memory standard (non-volatile memory express, NVMe) structure (NVMe over fabric, NOF) protocol and a small computer interface (small computer system interface, SCSI) protocol. The NAS may specifically include two protocols: a network file system (network file system, NFS) protocol and a service message block (service message block, SMB) protocol.

Then, in the computing node 220, the interface card 221 encapsulates the front-end storage protocol request into a network packet according to the corresponding network protocol, to send the front-end storage protocol request to the storage node side through the network. For example, currently, commonly used network protocols include an ethernet (ethernet, ETH) protocol, a fibre channel (fibre channel, FC) protocol, and a remote direct memory access (remote direct memory access, RDMA) protocol.

After the storage node 210 receives the network packet from the computing node 220, the interface card 212 decapsulates the network packet to obtain the front-end storage protocol request. Further, the operating system in the storage node 210 converts the front-end storage protocol request into a back-end driver protocol request according to a corresponding driver protocol (for example, a serial attached SCSI interface (Serial Attached SCSI, SAS) protocol, a serial advanced technology attachment (Serial Advanced Technology Attachment, SATA) protocol, and an NVMe protocol), allocates a location into which data is to be written on the hard disk, and writes the data into the hard disk by using a medium index.

It can be learned that in the foregoing process, first, in the computing node 220, the data storage request needs to be converted into the front-end storage protocol request through front-end protocol conversion, and the front-end storage protocol request further needs to be encapsulated in a payload of the network packet, to send the front-end storage protocol to the storage node 210. Then, in the storage node 210, the network packet needs to be decapsulated, the front-end storage protocol request is obtained from the payload of the network packet, and then the front-end storage protocol request is converted into the back-end driver protocol request, to allocate a storage unit to the data. This process requires a plurality of times of protocol format conversion. Consequently, an implementation process is complex, and a large quantity of system resources need to be consumed.

For the foregoing technical problem, in embodiments, it is considered that a network address may be allocated to the storage unit in the storage node by using a direct addressing capability of the network. In this way, in a manner in which the computing node sends the network packet whose destination address is the network address corresponding to the storage unit in the storage node, the addressing capability of the network layer may be directly used, to implement access (for example, reading/writing) to the storage unit.

Specifically, when the computing node 220 obtains the read/write request of the application (for example, when the application needs to perform a data read operation, the computing node 220 obtains a read request including an identifier of the to-be-processed data; or for another example, when the application needs to perform a data write operation, the computing node 220 obtains a write request including the to-be-processed data), the computing node 220 sends, to the network, the network packet whose destination address is a first address. The first address indicates the storage unit of the to-be-processed data in the storage node 210.

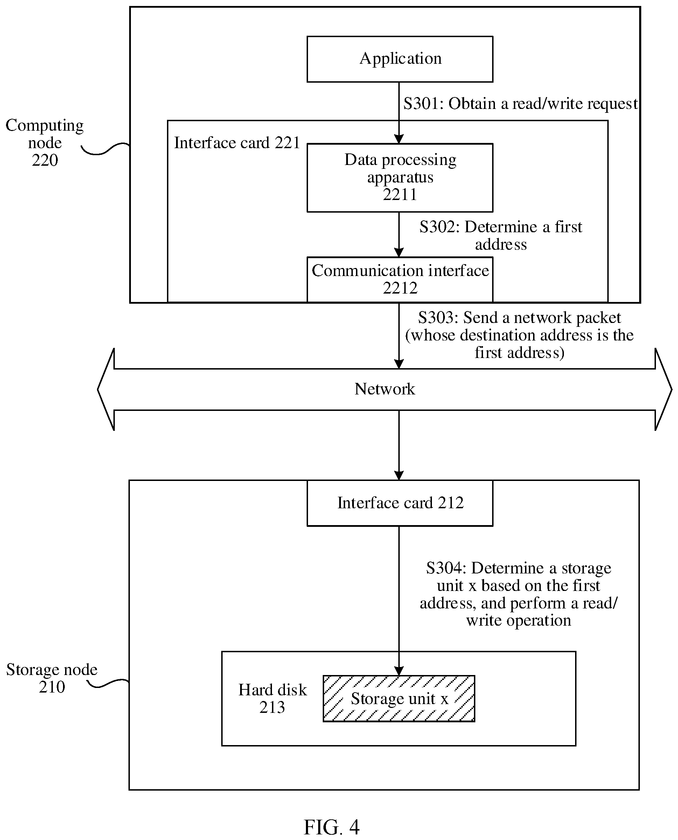

For example, as shown in FIG. 4, the computing node 220 includes a data processing apparatus 2211 configured to manage data storage. During actual application, a function of the data processing apparatus 2211 in FIG. 4 may also be implemented by a software or hardware module in the interface card 221. In the interface card 221, the data processing apparatus 2211 is connected to a communication interface 2212, to control sending of the network packet to the network through the communication interface 2212. Alternatively, a function of the data processing apparatus 2211 may be implemented by a software module in the operating system running on the processor 222 and the memory 223, or a function of the data processing apparatus 2211 may be implemented by another hardware module that is independent of the processor 222, the memory 223, and the interface card 221 in the computing node 220. This may not be limited in embodiments.

When the application in the computing node 220 needs to perform the data read/write operation, the application sends the read/write request to the data processing apparatus 2211 (namely, S301 in FIG. 4). The data processing apparatus 2211 determines, based on the read/write request, the first address corresponding to the to-be-processed data (namely, S302 in FIG. 4). Then, the computing node 220 sends the network packet whose destination address is the first address. As shown in FIG. 4, after the data processing apparatus 2211 determines the first address, the interface card 221 encapsulates the network packet based on the first address and sends the network packet (namely, S303 in FIG. 4).

Then, after a switching device (for example, a switch or a router) in the network forwards the network packet to the storage node 210 based on the destination address (namely, the first address) of the network packet, the storage node 210 may determine the storage unit in the hard disk of the storage node 210 based on the first address, and perform the read/write operation.

FIG. 4 is still used as an example. After receiving the network packet, the interface card 212 in the storage node 210 determines a storage unit x in the hard disk 213 based on the first address, and completes a read/write operation in the storage unit x (namely, S304 in FIG. 4).

In the technical solutions provided in embodiments, the network address is allocated to the storage unit in the storage node (that is, location information of the storage unit in the storage node is addressed to the network address). In this way, after receiving the network packet, the storage node 210 may determine the storage unit of the to-be-processed data in the storage node 210 based on the destination address of the network packet, that is, the storage unit of the to-be-processed data in the storage node 210 may be determined by using the addressing capability of the network layer, to implement access to the storage unit. In comparison with the related technology shown in FIG. 3, in embodiments, a front-end protocol conversion process on a side of the computing node 220 and a back-end protocol conversion process on a side of the storage node 210 can be simplified, thereby reducing system resource consumption in a data read/write process.

The following separately describes the technical solutions provided in embodiments in two scenarios: data writing and data reading.

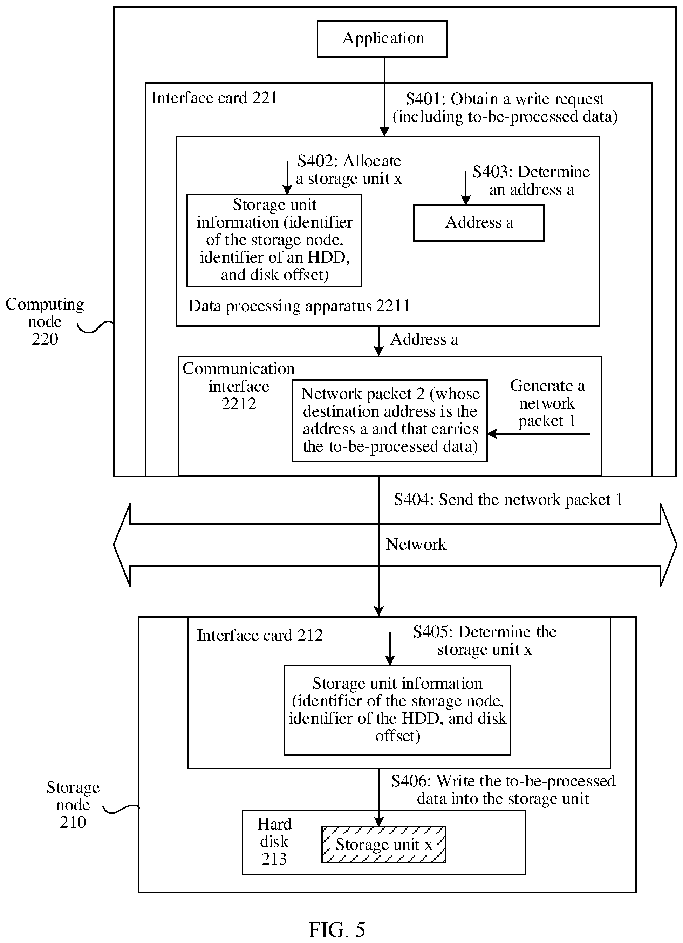

In a scenario in which the computing node 220 writes the data into the storage node 210, as shown in FIG. 5, the method may include the following steps.

S401: The computing node 220 obtains a write request.

The write request carries to-be-processed data.

For example, in FIG. 5, in the computing node 220, a data processing apparatus 2211 in an interface card 221 obtains the write request, from an application, that carries the to-be-processed data. Refer to the foregoing descriptions of the data processing apparatus 2211, a specific form of software/hardware of the data processing apparatus 2211 may not be limited in this embodiment.

S402: The computing node 220 allocates a storage unit x to the to-be-processed data in the storage node 210.

For example, in FIG. 5, after obtaining the write request, the data processing apparatus 2211 may allocate the storage unit x to the to-be-processed data in the storage node 210, and obtain storage unit information of the storage unit x. The storage unit information may include information, for example, an identifier of the storage node 210 (for example, an access address of the storage node) in which the storage unit x is located, an identifier of a hard disk of the storage unit x in the storage node 210 (the hard disk may be a logical disk or a physical magnetic disk, and the identifier of the hard disk may be an ID of the logical disk or the physical magnetic disk), and a disk offset of the storage unit x on the hard disk.

S403: The computing node 220 determines an address a based on the storage unit x.

For example, in FIG. 5, after allocating the storage unit x to the to-be-processed data in the storage node 210, the data processing apparatus 2211 may map the storage unit information of the storage unit x to a network address through addressing, to obtain the address a.

In an implementation, the address a may be an internet protocol version 6 (Internet Protocol Version 6, IPv6) address.

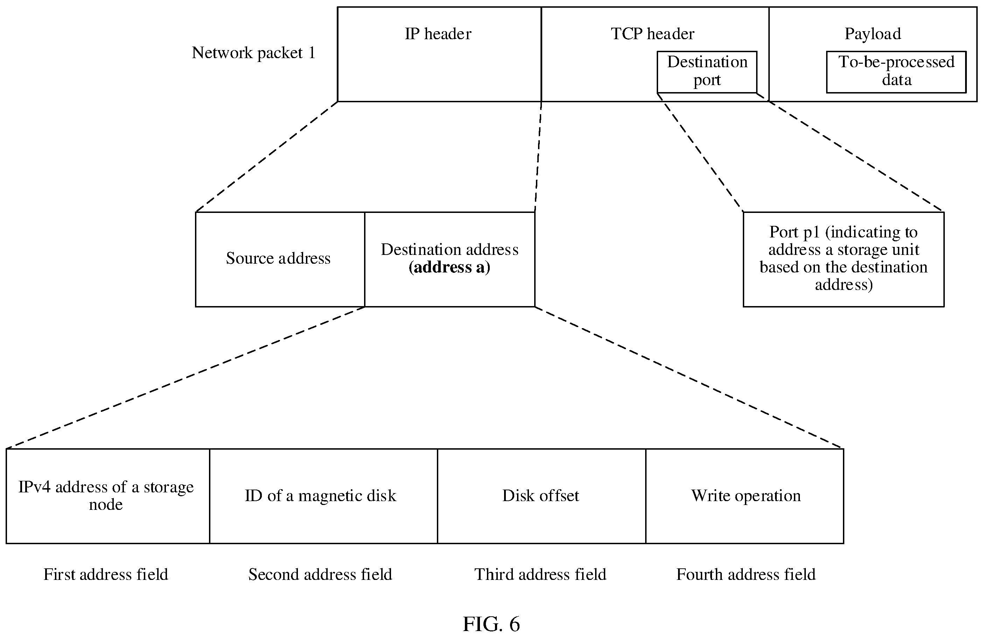

In a possible design, as shown in FIG. 6, the address a may be divided into a plurality of address fields. A first address field indicates the identifier of the storage node 210 in which the storage unit x is located (specifically, the first address field may be an IPv4 address of the storage node 210). A second address field indicates the identifier of the hard disk of the storage unit x in the storage node 210 (specifically, the second address field may indicate the ID of the hard disk). A third address field indicates the disk offset of the storage unit x on the hard disk.

In addition, in a possible design, as shown in FIG. 6, the address a may further include a fourth address field. The fourth address field indicates to write the to-be-processed data into the storage unit x (that is, indicates a write operation).

S404: The computing node 220 sends a network packet 1 whose destination address is the address a.

The network packet 1 carries the to-be-processed data.

For example, in FIG. 5, after a data processing apparatus 2211 determines the address a, the communication interface 2212 generates the network packet 1 whose destination address is the address a and that carries the to-be-processed data. Then, the communication interface 2212 forwards the network packet 1 to a network, so that a switching device in the network forwards the network packet 1 to the storage node 210.

For example, a structure of the network packet 1 is shown in FIG. 6. An IP header of the network packet 1 includes a source address and a destination address. The source address may be an IP address of the computing node 220, and the destination address is the address a. A specific structure of the address a is described in detail above. In addition, a payload (payload) of the network packet 1 carries the to-be-processed data.

In an implementation, after receiving the network packet 1, the storage node 210 can determine that the network packet 1 is used to address the storage unit x based on the destination address (namely, the address a) of the network packet 1, to perform a data read/write operation. In this embodiment, a TCP port type may be further predefined, and the TCP port type indicates to address the storage unit based on the destination address of the network packet. For example, as shown in FIG. 6, a destination port in a TCP header of the network packet 1 is a port p1, and the port p1 indicates to address the storage unit based on the destination address of the network packet 1.

In this way, after receiving the network packet 1, the storage node 210 may determine, based on the destination port (namely, the port p1) of the network packet 1, that the network packet 1 is used to address the storage unit x based on the destination address (namely, the address a) of the network packet 1. Then, the storage node 210 may determine the storage unit x based on the first address field, the second address field, and the third address field in the address a, and determine, based on the fourth address field in the address a, that the write operation needs to be performed; and the storage node 210 writes, into the storage unit x, the to-be-processed data carried in the payload of the network packet 1.

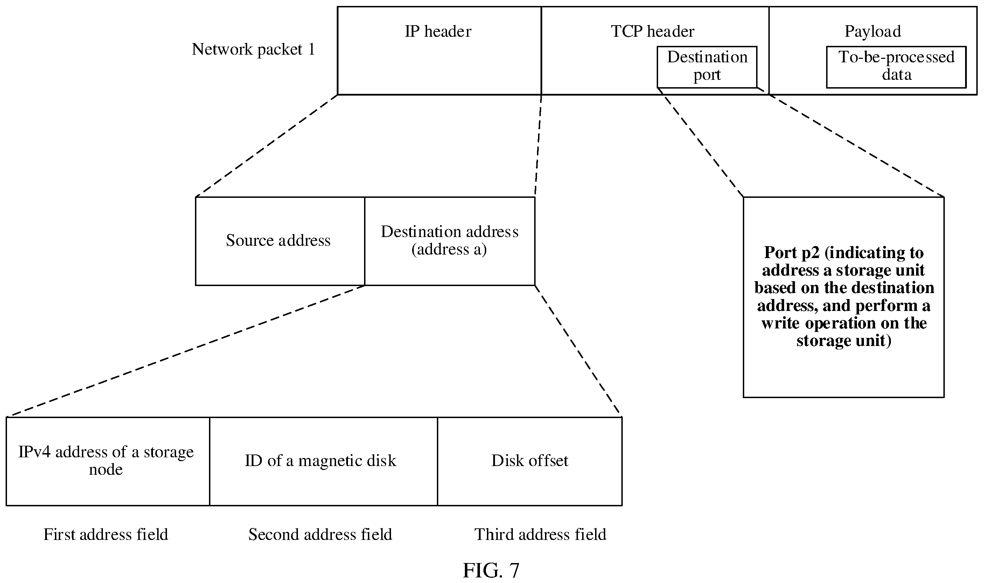

In another implementation, in this embodiment, a TCP port type may be further predefined, and the TCP port type indicates to address the storage unit based on the destination address of the network packet 1, and perform the write operation on the storage unit. For example, as shown in FIG. 7, a destination port in a TCP header of the network packet 1 is a port p2, and the port p2 indicates to address the storage unit based on the destination address of the network packet 1, and perform the write operation on the storage unit.

In this way, after receiving the network packet 1, the storage node 210 may determine, based on the destination port (namely, the port p2) of the network packet 1, that the network packet 1 is used to address the storage unit x based on the destination address (namely, the address a) of the network packet 1. Then, the storage node 210 may determine the storage unit x based on the first address field, the second address field, and the third address field in the address a; and the storage node 210 writes, into the storage unit x, the to-be-processed data carried in the payload of the network packet 1.

It can be learned that, in the foregoing implementation, because the TCP port is directly used to indicate that the network packet 1 is used to address the storage unit based on the destination address of the network packet 1, and perform the write operation on the storage unit, the address a may not include the fourth address field.

In addition, it should be noted that in S402 and S403 above, by using an example in which the computing node 220 can directly allocate and manage a location of the storage unit when the data is written into the storage node 210, the process in which the computing node 220 allocates the storage unit x to the to-be-processed data and determines the address a based on the storage unit x is described. In some other scenarios, the storage node 210 may alternatively allocate the storage unit to the to-be-processed data. For example, after receiving the network packet 1, the storage node 210 establishes a correspondence between the address a and the storage unit x. When the storage node 210 allocates the storage unit to the to-be-processed data, the computing node 220 may also not perform the content in S402 and S403 above.

After the storage node 210 receives the network packet 1, the method may further include the following steps.

S405: The storage node 210 determines the storage unit x corresponding to the address a.

For example, as shown in FIG. 5, in the storage node 210, after receiving the network packet 1, the interface card 212 may determine the storage unit information of the storage unit x based on the destination address (namely, the address a) of the network packet 1, that is, determine the storage unit x.

S406: The storage node 210 writes, into the storage unit x, the to-be-processed data carried in the network packet 1.

For example, after receiving the network packet 1 shown in FIG. 6, the interface card 212 first determines, based on the destination port (namely, the port p1) in the TCP header, that the network packet 1 is used to address the storage unit based on the destination address. Then, the interface card 212 determines the storage unit information of the storage unit x based on the first address field, the second address field, and the third address field in the address a. In addition, the interface card 212 further determines, based on the fourth address field in the address a, that the network packet 1 is used to write, into the determined storage unit, the to-be-processed data carried in the network packet 1, and then the interface card 212 writes the to-be-processed data into the storage unit x based on the storage unit information of the storage unit x.

For another example, after receiving the network packet 1 shown in FIG. 7, the interface card 212 first determines, based on the destination port (namely, the port p1) of the TCP header, that the network packet 1 is used to address the storage unit based on the destination address, and performs the write operation on the storage unit. Then, the interface card 212 determines the storage unit information of the storage unit x based on the first address field, the second address field, and the third address field in the address a; and the interface card 212 writes the to-be-processed data into the storage unit x based on the storage unit information of the storage unit x.

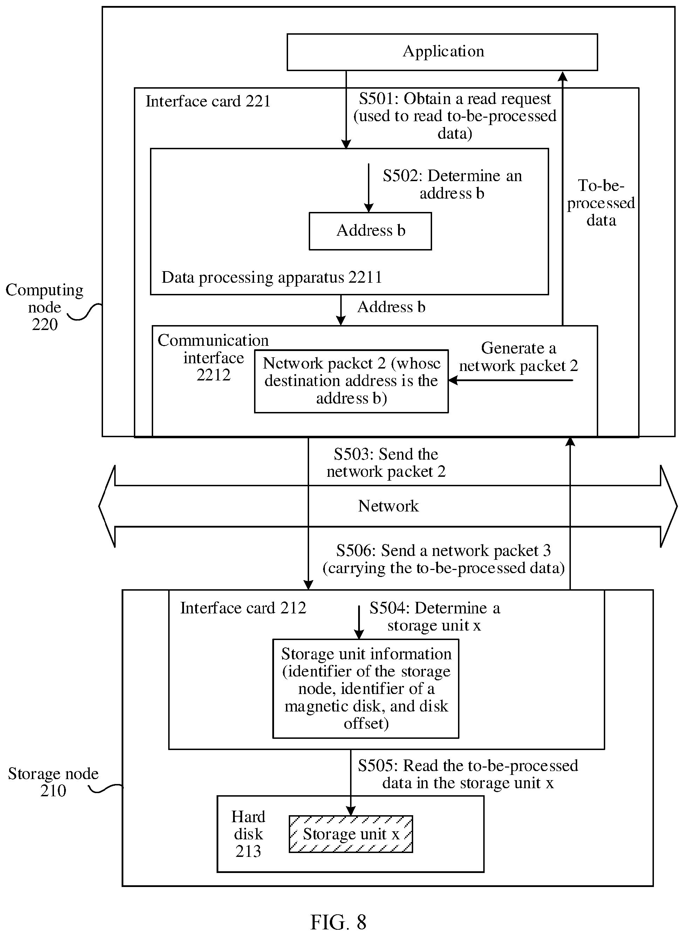

In a scenario in which the computing node 220 reads the data stored in the storage node 210, as shown in FIG. 8, the method may include the following steps.

S501: The computing node 220 obtains a read request.

The read request is used to read to-be-processed data. Specifically, the read request may carry an identifier such as a logical address of the to-be-processed data.

For example, in FIG. 8, in the computing node 220, a data processing apparatus 2211 obtains the read request from an application. Refer to the foregoing descriptions of the data processing apparatus 2211, a specific form of software/hardware of the data processing apparatus 2211 may not be limited in this embodiment.

S502: The computing node 220 determines an address b.

The address b indicates a storage unit x, of the to-be-processed data, in the storage node 210.

For example, in FIG. 8, in the computing node 220, the data processing apparatus 2211 may determine the address b based on the logical address, of the to-be-processed data, that is carried in the read request.

It may be understood that in some scenarios, for example, when the read request carries the address b, the computing node 220 may not perform content in S502.

Similar to the foregoing address a, in an implementation, the address b may be an internet protocol version 6 (Internet Protocol Version 6, IPv6) address.

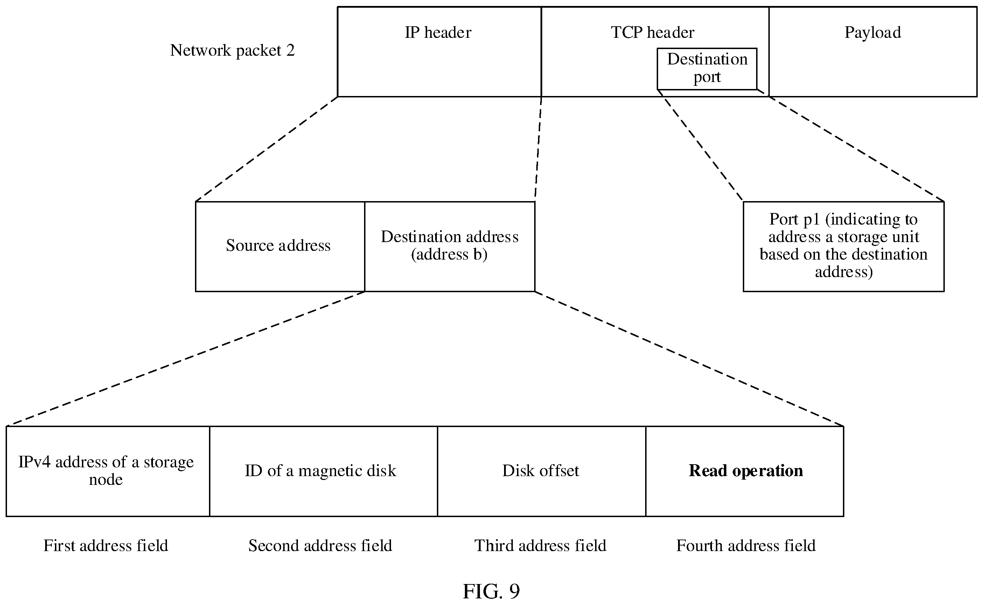

In a possible design, as shown in FIG. 9, the address b may be divided into a plurality of address fields. A first address field indicates the identifier of the storage node 210 in which the storage unit x is located (specifically, the first address field may be an IPv4 address of the storage node 210). A second address field indicates the identifier of the hard disk of the storage unit x in the storage node 210 (specifically, the second address field may indicate the ID of the hard disk). A third address field indicates the disk offset of the storage unit x on the hard disk.

In addition, in a possible design, as shown in FIG. 9, the address b may further include a fourth address field. The fourth address field indicates to read the data in the storage unit x (that is, indicates a read operation).

S503: The computing node 220 sends a network packet 2 whose destination address is the address b.

For example, in FIG. 8, after the data processing apparatus 2211 determines the address b, a communication interface 2212 generates the network packet 2 whose destination address is the address b. Then, the communication interface 2212 forwards the network packet 2 to the network, so that a switching device in a network forwards the network packet 2 to the storage node 210.

For example, a structure of the network packet 2 is shown in FIG. 9. An IP header of the network packet 2 includes a source address and a destination address. The source address may be an IP address of the computing node 220, and the destination address is the address b. A specific structure of the address b is described in detail above.

In an implementation, similar to the example shown in FIG. 6, after receiving the network packet 2, the storage node 210 can determine that the network packet 2 is used to address the storage unit x based on the destination address (namely, the address b) of the network packet 2, to perform the data read/write operation. In this embodiment, a TCP port type may be further predefined, and the TCP port type indicates to address the storage unit based on the destination address of the network packet 2. For example, as shown in FIG. 9, a destination port in a TCP header of the network packet 2 is a port p1, and the port p1 indicates to address the storage unit based on the destination address of the network packet 2.

In this way, after receiving the network packet 2, the storage node 210 may determine, based on the destination port (namely, the port p1) of the network packet 2, that the network packet 2 is used to address the storage unit x based on the destination address (namely, the address b) of the network packet 2. Then, the storage node 210 may determine the storage unit x based on the first address field, the second address field, and the third address field in the address b, and determine, based on the fourth address field in the address b, that the read operation needs to be performed; and the storage node 210 reads the data in the storage unit x and feeds back the data to the computing node 220.

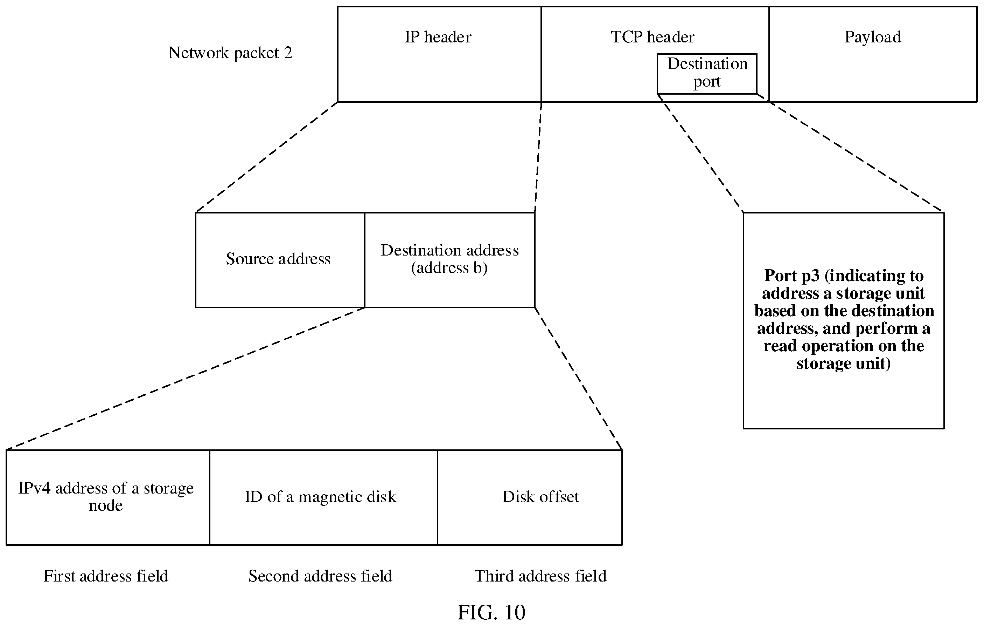

In another implementation, in this embodiment, a TCP port type may be further predefined, and the TCP port type indicates to address the storage unit based on the destination address of the network packet 2, and perform the read operation on the storage unit. For example, as shown in FIG. 10, a destination port in a TCP header of the network packet 2 is a port p3, and the port p3 indicates to address the storage unit based on the destination address of the network packet 2, and perform the read operation on the storage unit.

In this way, after receiving the network packet 2, the storage node 210 may determine, based on the destination port (namely, the port p3) of the network packet 2, that the network packet 2 is used to address the storage unit x based on the destination address (namely, the address b) of the network packet 2. Then, the storage node 210 may determine the storage unit x based on the first address field, the second address field, and the third address field in the address b; and the storage node 210 reads the data in the storage unit x and feeds back the data to the computing node 220.

It can be learned that, in the foregoing implementation, because the TCP port is directly used to indicate that the network packet 2 is used to address the storage unit based on the destination address of the network packet 2, and perform the read operation on the storage unit, the address b may not include the fourth address field.

After the storage node 210 receives the network packet 2 in S503 above, the method may further include the following steps.

S504: The storage node 210 determines the storage unit x corresponding to the address b.

For example, as shown in FIG. 8, in the storage node 210, after receiving the network packet 2, the interface card 212 may determine the storage unit information of the storage unit x based on the destination address (namely, the address b) of the network packet 2, that is, determine the storage unit x.

S505: The storage node 210 reads the to-be-processed data in the storage unit x.

For example, after receiving the network packet 2 shown in FIG. 9, the interface card 212 first determines, based on the destination port (namely, the port p1) in the TCP header, that the network packet 2 is used to address the storage unit based on the destination address. Then, the interface card 212 determines the storage unit information of the storage unit x based on the first address field, the second address field, and the third address field in the address b. In addition, the interface card 212 further determines, based on the fourth address field in the address b, that the network packet 2 is used to read the data in the storage unit, and then the interface card 212 reads the to-be-processed data in the storage unit x based on the storage unit information of the storage unit x.

For another example, after receiving the network packet 2 shown in FIG. 10, the interface card 212 first determines, based on the destination port (namely, the port p3) of the TCP header, that the network packet 2 is used to address the storage unit based on the destination address, and performs the read operation on the storage unit. Then, the interface card 212 determines the storage unit information of the storage unit x based on the first address field, the second address field, and the third address field in the address b; and the interface card 212 reads the to-be-processed data in the storage unit x based on the storage unit information of the storage unit x.

S506: The storage node 210 sends the to-be-processed data to the computing node 220.

For example, in FIG. 8, in the storage node 210, after reading the to-be-processed data, the interface card 212 encapsulates the to-be-processed data into a network packet 3 and sends the network packet 3 to the computing node 220. Then, after receiving the network packet 3, the computing node 220 feeds back the to-be-processed data carried in the network packet 3 to the application.

For the processing process in which the storage node 210 sends the to-be-processed data to the computing node 220 and the computing node 220 receives the to-be-processed data, refer to the related technology. Details are not described herein.

In addition, this embodiment further provides an interface card. The interface card can be configured to perform some or all steps in the foregoing data processing method in this embodiment.

It may be understood that, to implement functions in the foregoing data processing method, the interface card includes a corresponding hardware structure and/or software module for performing each function. A person skill in the art should be easily aware that, in combination with the units and method steps in the examples described in embodiments, the technical solutions provided in embodiments can be implemented by hardware or a combination of hardware and computer software. Whether a function is performed by hardware or hardware driven by computer software depends on particular application scenarios and design constraint conditions of the technical solutions.

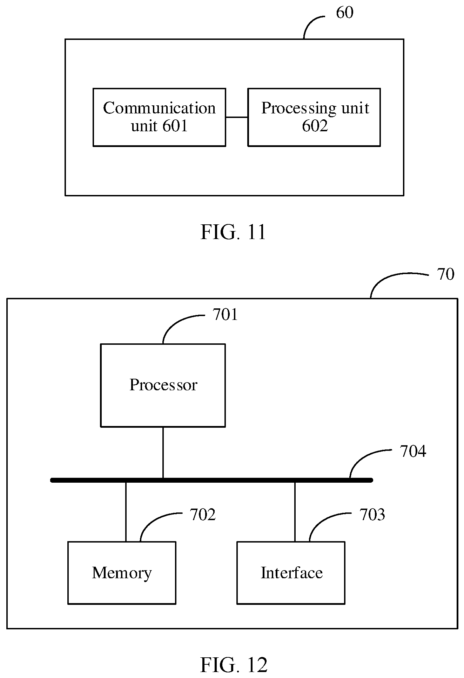

FIG. 11 is a diagram of a structure of an interface card according to an embodiment. The interface card 60 includes one or both of a communication unit 601 and a processing unit 602. The data processing apparatus may be configured to implement functions of some or all steps of the interface card 221 or the interface card 212 in the method described in FIG. 4, FIG. 5, or FIG. 8.

When the interface card 60 is configured to implement the functions of the interface card 221 in the method in FIG. 4, FIG. 5, or FIG. 8,
the communication unit 601 may be configured to perform one or more of S303 in FIG. 4, S404 in FIG. 5, and S503 in FIG. 8; and
the processing unit 602 may be configured to perform one or more of S301 and S302 in FIG. 4, S401 to S403 in FIG. 5, and S501 and S502 in FIG. 8.

When the interface card 60 is configured to implement the functions of the interface card 212 in the method in FIG. 4, FIG. 5, or FIG. 8,
the communication unit 601 may be configured to perform the function of receiving the network packet from the computing node or sending the network packet to the computing node in FIG. 4, FIG. 5, and FIG. 8; and
the processing unit 602 may be configured to perform one or more of S304 in FIG. 4, S405 and S406 in FIG. 5, and S504 and S505 in FIG. 8.

For more detailed descriptions of the communication unit 601 and the processing unit 602, directly refer to related descriptions in the methods shown in FIG. 4, FIG. 5, and FIG. 8. Details are not described herein again.

FIG. 12 is a diagram of a structure of another interface card according to this application. The interface card 70 is configured to implement the data processing method provided in this application. Specifically, the interface card may be configured to implement some or all steps of the interface card 221 or the interface card 212 in the foregoing data processing method. The interface card 70 includes:
a processor 701, configured to perform the data processing method provided in this application.

Specifically, the processor 701 may include a general-purpose central processing unit (central processing unit, CPU) and a storage, or the processor 701 may be a microprocessor, a field programmable logic gate array (Field Programmable Gate Array, FPGA), an application-specific integrated circuit (application-specific integrated circuit, ASIC), or the like. In a scenario in which the processor 701 includes a CPU and a storage, the CPU executes computer instructions stored in the storage, to perform the data processing method provided in this application.

In addition, the interface card 70 may further include a storage 702. The storage 702 stores computer instructions, and the processor 701 executes the computer instructions stored in the storage, to perform the data processing method provided in this application.

Specifically, the storage 702 may be a read-only memory (read-only memory, ROM) or another type of static storage device capable of storing static information and instructions, or a random access memory (random access memory, RAM) or another type of dynamic storage device capable of storing information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium capable of being for carrying or storing program code in a form of instructions or a data structure and capable of being accessed by a computer, but is not limited thereto.

In addition, the interface card 70 may further include an interface 703. The interface 703 may be configured to receive and send data. The interface 702 may be a communication interface, a transceiver, or the like.

In addition, the interface card 70 may further include a communication line 704. For example, the communication line 704 may be a data bus, and is configured to transmit information between the foregoing components.

For more detailed descriptions of the foregoing interface card 70, directly refer to related descriptions in the foregoing data processing method. Details are not described herein again.

The method steps in embodiments of this application may be implemented in a hardware manner, or may be implemented in a manner of executing software instructions by the processor. The software instructions include corresponding software modules. The software modules may be stored in a RAM, a flash memory, a ROM, a PROM, an EPROM, an EEPROM, a register, a hard disk, a removable hard disk, a CD-ROM, or any other form of storage medium well-known in the art. For example, the storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or some of the foregoing embodiments may be implemented by software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc (digital video disc, DVD); or may be a semiconductor medium, for example, an SSD.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, "a plurality of" means two or more, and other quantifiers are similar to the foregoing case. The term "and/or" describes an association relationship between associated objects and indicates that three relationships may exist. For example, A and/or B may indicate the following three cases: Only A exists, both A and B exist, and only B exists. In addition, an element (element) appearing in a singular form with "a", "an", or "the" does not mean "one or only one" unless otherwise specified in the context, but means "one or more than one". For example, "a device" means one or more such devices. Further, "at least one of (at least one of)..." means one or any combination of subsequent associated objects. For example, "at least one of A, B, and C" includes A, B, C, AB, AC, BC, or ABC. In the text descriptions of this application, the character "/" represents an "or" relationship between the associated objects. In a formula in this application, the character "/" represents a "division" relationship between the associated objects.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

## Claims

1. A data processing method, wherein the method comprises:
receiving, by an interface card of a computing node, a write request from an application, wherein the write request carries to-be-processed data; and
sending, by the interface card, a network packet whose destination address is a first address, wherein the network packet carries the to-be-processed data, the first address indicates a storage unit of the to-be-processed data in a storage node, and the network packet is used to write the to-be-processed data into the storage unit; and the interface card communicates with the storage node through a network.

2. The method according to claim 1, wherein the method further comprises:
allocating, by the interface card, the storage unit to the to-be-processed data in the storage node.

3. The method according to claim 1 or 2, wherein the first address comprises at least one of a first address field, a second address field, or a third address field, the first address field identifies the storage node, the second address field identifies a hard disk that is in the storage node and that is configured to store the to-be-processed data, and the second address field identifies the storage unit that is in the hard disk and that is configured to store the to-be-processed data.

4. The method according to any one of claims 1 to 3, wherein the first address comprises a fourth address field, and the fourth address field indicates to write the to-be-processed data into the storage unit.

5. The method according to any one of claims 1 to 4, wherein the first address is an internet protocol version 6 IPv6 address.

6. A data processing method, wherein the method comprises:
receiving, by an interface card of a storage node, a network packet whose destination address is a first address from a computing node, wherein the network packet carries to-be-processed data; and the interface card communicates with the computing node through a network;
determining, by the interface card, a storage unit in the storage node corresponding to the first address; and
writing, by the interface card, the to-be-processed data into the storage unit.

7. The method according to claim 6, wherein the determining, by the interface card, a storage unit in the storage node corresponding to the first address comprises:
determining, by the interface card based on a first address field in the first address, that the network packet is a network packet sent to the storage node;
determining, by the interface card based on a second address field in the first address, a hard disk that is in the storage node and that is configured to store the to-be-processed data; and
determining, by the interface card based on a third address field in the first address, the storage unit that is in the hard disk and that is configured to store the to-be-processed data.

8. The method according to claim 6 or 7, wherein the method further comprises:
determining, by the interface card based on a fourth address field in the first address, that the network packet is used to write the to-be-processed data into the storage unit.

9. A data processing method, wherein the method comprises:
receiving, by an interface card of a computing node, a read request from an application, wherein the read request is used to request to read to-be-processed data;
sending, by the interface card, a network packet whose destination address is a first address, wherein the first address indicates a storage unit of the to-be-processed data in a storage node, and the network packet is used to read the to-be-processed data in the storage unit; and the interface card communicates with the storage node through a network; and
receiving, by the interface card, the to-be-processed data from the storage node.

10. The method according to claim 9, wherein the first address comprises at least one of a first address field, a second address field, and a third address field, the first address field identifies the storage node, the second address field identifies a hard disk that is in the storage node and that is configured to store the to-be-processed data, and the second address field identifies the storage unit that is in the hard disk and that is configured to store the to-be-processed data.

11. The method according to claim 9 or 10, wherein the first address comprises a fourth address field, and the fourth address field indicates that the network packet is used to write the to-be-processed data into the storage unit.

12. The method according to any one of claims 9 to 11, wherein the first address is an internet protocol version 6 IPv6 address.

13. A data processing method, wherein the method comprises:
receiving, by an interface card of a storage node, a network packet whose destination address is a first address from a computing node; wherein the interface card communicates with the computing node through a network;
determining, by the interface card, a storage unit in the storage node corresponding to the first address; and
sending, by the interface card to the computing node, to-be-processed data stored in the storage unit.

14. The method according to claim 13, wherein the determining, by the interface card, a storage unit in the storage node corresponding to the first address comprises:
determining, by the interface card based on a first address field in the first address, that the network packet is a network packet sent to the storage node;
determining, by the interface card based on a second address field in the first address, a hard disk that is in the storage node and that is configured to store the to-be-processed data; and
determining, by the interface card based on a third address field in the first address, the storage unit that is in the hard disk and that is configured to store the to-be-processed data.

15. The method according to claim 13 or 14, wherein the method further comprises:
determining, by the interface card based on a fourth address field in the first address, that the network packet is used to write the to-be-processed data into the storage unit.

16. An interface card, wherein the interface card is used in a computing node in a storage system, and the interface card comprises:
a processing unit, configured to receive a write request from an application, wherein the write request carries to-be-processed data; and
a communication unit, configured to send a network packet whose destination address is a first address, wherein the network packet carries the to-be-processed data, the first address indicates a storage unit of the to-be-processed data in a storage node, and the network packet is used to write the to-be-processed data into the storage unit; and the interface card communicates with the storage node through a network.

17. The interface card according to claim 16, wherein the processing unit is further configured to allocate the storage unit to the to-be-processed data in the storage node.

18. The interface card according to claim 16 or 17, wherein the first address comprises at least one of a first address field, a second address field, and a third address field, the first address field identifies the storage node, the second address field identifies a hard disk that is in the storage node and that is configured to store the to-be-processed data, and the second address field identifies the storage unit that is in the hard disk and that is configured to store the to-be-processed data.

19. The interface card according to any one of claims 16 to 18, wherein the first address comprises a fourth address field, and the fourth address field indicates to write the to-be-processed data into the storage unit.

20. The interface card according to any one of claims 16 to 19, wherein the first address is an internet protocol version 6 IPv6 address.

21. An interface card, wherein the interface card is used in a storage node in a storage system, and the interface card comprises:
a communication unit, configured to receive a network packet whose destination address is a first address from a computing node, wherein the network packet carries to-be-processed data; and the interface card communicates with the computing node through a network; and
a processing unit, configured to determine a storage unit in the storage node corresponding to the first address, wherein
the processing unit is further configured to write the to-be-processed data into the storage unit.

22. The interface card according to claim 21, wherein that a processing unit is configured to determine a storage unit in the storage node corresponding to the first address comprises:
the processing unit is configured to determine, based on a first address field in the first address, that the network packet is a network packet sent to the storage node;
the processing unit is configured to determine, based on a second address field in the first address, a hard disk that is in the storage node and that is configured to store the to-be-processed data; and
the processing unit is configured to determine, based on a third address field in the first address, the storage unit that is in the hard disk and that is configured to store the to-be-processed data.

23. The interface card according to claim 21 or 22, wherein the processing unit is further configured to determine, based on a fourth address field in the first address, that the network packet is used to write the to-be-processed data into the storage unit.

24. An interface card, wherein the interface card is used in a computing node in a storage system, and the interface card comprises:
a processing unit, configured to receive a read request from an application, wherein the read request is used to request to read to-be-processed data; and
a communication unit, configured to send a network packet whose destination address is a first address, wherein the first address indicates a storage unit of the to-be-processed data in a storage node, and the network packet is used to read the to-be-processed data in the storage unit; and the interface card communicates with the storage node through a network, wherein
the communication unit is further configured to receive the to-be-processed data from the storage node.

25. The interface card according to claim 24, wherein the first address comprises at least one of a first address field, a second address field, and a third address field, the first address field identifies the storage node, the second address field identifies a hard disk that is in the storage node and that is configured to store the to-be-processed data, and the second address field identifies the storage unit that is in the hard disk and that is configured to store the to-be-processed data.

26. The interface card according to claim 24 or 25, wherein the first address comprises a fourth address field, and the fourth address field indicates that the network packet is used to write the to-be-processed data into the storage unit.

27. The interface card according to any one of claims 24 to 26, wherein the first address is an internet protocol version 6 IPv6 address.

28. An interface card, wherein the interface card is used in a storage node in a storage system, and the interface card comprises:
a communication unit, configured to receive a network packet whose destination address is a first address from a computing node, wherein the interface card communicates with the computing node through a network; and
a processing unit, configured to determine a storage unit in the storage node corresponding to the first address, wherein
the communication unit is further configured to send, to the computing node, to-be-processed data stored in the storage unit.

29. The interface card according to claim 28, wherein that a processing unit is configured to determine a storage unit in the storage node corresponding to the first address comprises:
the processing unit is configured to determine, based on a first address field in the first address, that the network packet is a network packet sent to the storage node;
the processing unit is configured to determine, based on a second address field in the first address, a hard disk that is in the storage node and that is configured to store the to-be-processed data; and
the processing unit is configured to determine, based on a third address field in the first address, the storage unit that is in the hard disk and that is configured to store the to-be-processed data.

30. The interface card according to claim 28 or 29, wherein the processing unit is further configured to determine, based on a fourth address field in the first address, that the network packet is used to write the to-be-processed data into the storage unit.

31. An interface card, comprising a processor and an interface, wherein the processor is configured to receive or send data through the interface, and the processor is configured to implement the method according to any one of claims 1 to 15.

32. A computer-readable storage medium, wherein the storage medium stores a computer program; and when the computer program is executed by a processor, the method according to any one of claims 1 to 15 is implemented.
